(19) Europäisches Patentamt
European Patent Office
Office européen des brevets

(11) **EP 4 287 463 B1**

(12) **EUROPEAN PATENT SPECIFICATION**

(45) Date of publication and mention
of the grant of the patent:
**29.07.2026 Bulletin 2026/31**

(21) Application number: **21936695.2**

(22) Date of filing: **10.09.2021**

(51) International Patent Classification (IPC):
*H02K 1/26* (2006.01)    *H02K 1/14* (2006.01)
*H02K 17/20* (2006.01)    *H02K 29/03* (2006.01)

(52) Cooperative Patent Classification (CPC):
**H02K 1/146; H02K 17/20; H02K 29/03;**
H02K 2201/03; H02K 2201/06; H02K 2213/03

(86) International application number:
**PCT/CN2021/117708**

(87) International publication number:
**WO 2022/217824 (20.10.2022 Gazette 2022/42)**

(54) **MOTOR, COMPRESSOR, AND FAN**

MOTOR, VERDICHTER UND LÜFTER

MOTEUR, COMPRESSEUR ET VENTILATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2021  CN 202110402762**

(43) Date of publication of application:
**06.12.2023  Bulletin 2023/49**

(73) Proprietors:
• **Guangdong Welling Motor Manufacturing Co.,
Ltd.**
**Foshan, Guangdong 528311 (CN)**
• **Midea Welling Motor Technology (Shanghai) Co.,
Ltd**
**Shanghai 201203 (CN)**

(72) Inventor: **YAO, Shuchun**
**Foshan, Guangdong 528311 (CN)**

(74) Representative: **RGTH
Patentanwälte PartGmbB
Mönckebergstraße 11
20095 Hamburg (DE)**

(56) References cited:
CN-A- 109 861 479      CN-A- 110 299 774
CN-A- 110 718 974      CN-A- 113 162 269
CN-B- 110 718 974      CN-U- 201 674 372
FR-A1- 3 032 313       JP-A- 2017 184 451
JP-A- 2020 127 288     US-A1- 2006 192 457
US-A1- 2014 028 148

## Description

### FIELD

The present invention relates to the field of motor equipment, and particularly relates to a motor, a compressor, and a fan.

### BACKGROUND

Currently, with the continuous deepening of a DCization technology in the fields of electrical appliances, automobiles, etc., in the application scenes such as a fan in an electrical appliance and a compressor in an automobile, the requirement for the operation efficiency of a motor is further higher and higher.

However, the structural designs for existing motors still face a large starting additional torque of the motors in practical applications, which can hardly match starting and rated performance.

FR 3 032 313 A1 relates to a rotary electric machine of the asynchronous machine type comprising a stator in which is freely mounted a substantially elongated rotor capable of rotating on itself along the longitudinal axis of said rotor, said stator (10) and said rotor each comprising a determined number Zs and Zr of elongated slots respectively facing each other, wherein said rotor slots are filled by first conductive elements, forming a first winding, shortcircuited, and in which said stator slots are filled by second conductor elements, forming a second winding, electrically supplied by so-called stator currents creating in said second winding a rotating magnetic field having p pairs of poles, the stator slots or rotor slots being inclined relative to the longitudinal axis of said rotor by a stator inclination angle $\alpha$s or rotor inclination angle $\alpha$r determined as a function of the number p of pole pairs and the number of slots Zs or Zr.

US 2006/192457 A1 discloses an electric rotating machine comprising: a stator in which a coil is wound on a plurality of teeth in concentrated winding, and the coil is connected to a three-phase power supply; and a rotor disposed in opposition to the teeth of the stator; wherein a ratio between the number of poles and the number of slots of the stator is 1:3. There is no higher harmonics of magnetomotive force in low order close to fundamental wave, thus enabling efficient operation of the electric rotating machine.

US 2014/028148 A1 discloses an interior permanent magnet machine. The machine includes a rotor rotatable about a central machine axis. The rotor includes a plurality of permanent magnet openings and a plurality of permanent magnets disposed therein. The permanent magnet openings are separated by rotor webs configured to facilitate reducing leakage flux through the rotor webs. The machine also includes a stator disposed coaxially with the rotor and separated from the rotor by a circumferential air gap. The stator includes a plurality of stator teeth that define a plurality of stator slots therebetween. The stator teeth include a stator tooth tip configured to facilitate reducing cogging torque and torque ripple.

CN 110 718 974 B discloses a motor stator, a pole shoe processing method thereof and a permanent magnet motor. The motor stator comprises a yoke part, pole shoes and stator teeth; in a cross section perpendicular to the central axis of the yoke portion, at least a part of the pole shoes are provided with chamfered edges; the radial inner circumferential wall of the pole shoes with the chamfered edge comprises an arc segment and a straight line segment located on the arc segment. An intersection point of the straight line segment and the arc segment is a clipping point I, the connecting line of the clipping point I at one end and the stator center O is OI, the included angle formed by OI and OH is phi, wherein theta>=phi>=theta/2, theta = alpha-beta, alpha is the included angle between the center lines of two adjacent stator teeth, beta = pi/P, and P is the rotor pole number.

### SUMMARY

The present invention aims to solve at least one of the problems in the prior art or related art.

Thus, the first aspect of the present invention proposes a motor.

The second aspect of the present invention proposes a compressor.

The third aspect of the present invention proposes a fan.

In view of this, the first aspect of the present invention proposes a motor, comprising: a rotor core, a rotor slot and a stator core. And the rotor slot is arranged on and extending through the rotor core, and the rotor slot is inclined with respect to the axial direction. The stator core is disposed on one side of the rotor core. The stator core comprises a stator tooth facing the rotor core, an air gap is provided between the stator tooth and the rotor core, and at least some of the air gaps have unequal lengths.

The motor proposed in the present invention comprises the rotor core, the rotor slot and the stator core. The rotor slot is arranged in the rotor core, and the rotor slot is arranged extending through the rotor core. That is, along the extending direction of the rotor slot, the rotor slot comprises two ends, and both of the two ends of the rotor slot are located in the axial end surface of the rotor core. Furthermore, the rotor slot is inclined with respect to the axial direction of the rotor core, that is, the extending direction of the rotor slot is a non-axial direction, and there is an included angle between the rotor slot and the axial end surface of the rotor core, i.e., the rotor slot is an inclined slot.

Furthermore, the stator core is disposed on one side of the rotor core, that is, the stator core is located on the inner side of the rotor core, i.e., the rotor core is an external rotor, and in this application scene, the rotor core is in a ring shape, and the stator core is provided inside the ring-shaped rotor core. Or, the stator core is located on the outer side of the rotor core, i.e., the rotor core is an internal rotor, and in this application scene, the stator core is in a ring shape, and the rotor core is located on the inner side of the ring-shaped stator core.

Furthermore, the stator core comprises a stator tooth facing the rotor core. For the rotor core located on the inner side of the stator core, an air gap is formed between the stator tooth and the external circle of the rotor core. For the rotor core located on the outer side of the stator core, an air gap is formed between the stator tooth and internal circle of the rotor core. For the air gap formed between the stator tooth and the rotor core, the air gap generally extends along a circumferential direction; the air gaps comprise air gap lengths at different positions, and at least some of the air gaps have unequal lengths, that is, the air gaps between the stator tooth and the rotor core are not completely equal or are completely unequal. Through disposing inclined rotor slots in the rotor core and forming air gaps between the stator teeth and the rotor core that are not completely equal or completely unequal, the present invention satisfies the requirements of reducing the low-speed harmonic torque fluctuation and improving the output performance of the motor, and then the starting additional torque and rated performance of the motor can be matched with each other. In an embodiment, the rotor slots are inclined with respect to the axial direction, the starting additional torque of the motor can be weakened, and then the working point of the motor matches and satisfies a target value.

In a possible embodiment, furthermore, the stator tooth comprise an arc segment and an arc cutting segment which are connected to each other and located on an axial end surface, a distance between the arc segment and the rotor core is a first air gap $g_1$, a maximum distance between the arc cutting segment and the rotor core is a second air gap $g_2$, and, $1.5g_1 \leq (g_2-g_1) \leq 6g_1$.

In the embodiment, the stator teeth comprise tooth roots and tooth boots, the tooth boots are connected to the end portion of the tooth roots close to the rotor core, the tooth boots comprise tooth walls facing the rotor core, and air gaps can be formed between the tooth walls and the rotor core. The tooth walls comprise the arc segment and the arc cutting segment located on the axial end surface. It needs to be explained that the axial end surface indicates a plane perpendicular to the axial direction, i.e., the cross section of the stator teeth. The arc segment is connected to the arc cutting segment. For the rotor core located on the inner side of the stator core, the rotor core comprises a maximum outer contour surface, the maximum outer contour surface comprises a maximum outer contour circle on the axial end surface, and the air gaps between the stator teeth and the rotor core indicate the distance between the rotor teeth and the maximum outer contour circle. Likewise, for the rotor core located on the outer side of the stator core, the rotor core comprises a minimum inner contour surface, the minimum inner contour surface comprises a minimum inner contour circle on the axial end surface, and the air gaps between the stator teeth and the rotor core indicate the distance between the stator teeth and the minimum inner contour circle.

For the specific application to the internal rotor, as for the arc segment, the distances of the air gaps formed between any point on the arc segment and the maximum outer contour circle are equal, the air gap is the first air gap, and the first air gap is the minimum air gap. For the arc cutting segment, the arc cutting segment comprises a first end point and a second end point opposing to each other, the first end point is connected to the arc segment, and the distance between the first end point and the maximum outer contour circle is not equal to the distance between the second end point and the maximum outer contour circle, that is, the air gaps formed between the arc cutting segment and the maximum outer contour circle are not equal. That is, in a direction from the first end point to the second end point, the air gaps formed between the arc cutting segment and the maximum outer contour circle gradually become larger, the maximum air gap between the arc cutting segment and the maximum outer contour circle is the second air gap, and then, the first air gap and the second air gap are made to satisfy the above relation, to satisfy the requirements of reducing the low-speed harmonic torque fluctuation and improving the output performance of the motor, and then the starting additional torque and rated performance of the motor can be matched with each other.

It needs to be explained that the arc cutting segment can be a straight line segment, and the arc cutting segment can further be a curved line segment. When there are a plurality of arc cutting segments, the plurality of arc cutting segments comprise the straight line segments and/or the curved line segments.

In a possible embodiment, furthermore, the arc cutting segment comprises a first line segment and a second line segment, and the first line segment and the second line segment are respectively located on the two opposite sides of the arc segment.

In the embodiment, there can be a plurality of arc cutting segments, the plurality of arc cutting segments comprise the first line segment and the second line segment, and the first line segment and the second line segment are respectively located on the two opposite sides of the arc segment. In a circumferential direction, the stator teeth comprise the first line segment, the arc segment and the second line segment, i.e., the tooth wall of the stator teeth facing the rotor core comprises three segments. It needs to be explained that the first line segment and the second line segment can be prepared by a cutting method. In an embodiment, the wall surface of the stator teeth facing the rotor core can be a segment of arc in an initial state, through conducting cutting on the two sides of the stator teeth in the circumferential direction, i.e., adopting an arc cutting method, the maximum distance of arc cutting is $g_2$-$g_1$, and the maximum distance of arc cutting and the minimum air gap (the first air gap $g_1$) between the stator core and the rotor core satisfy the abovementioned relation, and thereby the output performance of the motor is improved.

In a possible embodiment, furthermore, the number of the first line segment is at least one. The number of the first line segment is in one-to-one correspondence with the number of the second line segment.

In the embodiment, the number of the first line segment is one, and the number of the second line segment further is one; apparently, the number of the second line segment can further be multiple, and the number of the second line segment can further be different from the number of the first line segment.

When the number of the second line segment is the same with the number of the first line segment, the tooth wall of the stator teeth comprises three segments along the circumferential direction, i.e., the first line segment, the arc segment and the second line segment. Undoubtedly, the number of the first line segment and the second line segment can be x, and, x≥2, and in this application scene, the tooth wall of the stator teeth comprises 2x+1 segments along the circumferential direction, in an embodiment, there are x first line segments, the arc segment and x second line segments. Multiple forms of the tooth wall of the stator teeth are achieved by at least one first line segment and at least one second line segment, and then the lengths of the air gaps provided between different forms of tooth walls and the rotor core satisfy the requirements, and further the output performance of the motor can be effectively improved.

In a possible embodiment, furthermore, an included angle formed by lines connecting two ends of the first line segment respectively to a center of the stator core is $\gamma_1$, the included angle formed by lines connecting two ends of the second line segment respectively to the center of the stator core is $\gamma_2$, and it satisfies: $\gamma_1$=$\gamma_2$.

In the embodiment, as mentioned above, the first line segment comprises the first end point and the second end point opposing to each other, the first end point is connected to the arc segment, and the distance between the first end point and the maximum outer contour circle is not equal to the distance between the second end point and the maximum outer contour circle, and the distance between the first end point and the center of the stator core is further not equal to the distance between the second end point and the center of the stator core. It needs to be explained that the center of the stator core indicates a cutting point of the central axis of the stator core on the cross section, and the cutting point, the arc segment and the arc cutting segment are located at the same plane. In an embodiment, the connecting lines between the first end point and the center of the stator core and between the second end point and the center of the stator core form the included angle $\gamma_1$, and likewise, the included angle formed by the connecting lines between the two ends of the second line segment and the center of the stator core is $\gamma_2$, and $\gamma_1$=$\gamma_2$, that is, a portion of the stator teeth is cut to form the first line segment and the second line segment, the central angles corresponding to the cutting portions are equal to each other, that is, the lengths of the projections of the first line segment and the second line segment in the circumferential direction are equal.

In a possible embodiment, furthermore, the central angle corresponding to the arc segment is $\gamma_0$, which satisfies $\gamma_0$≥$\gamma_1$.

In the embodiment, the central angle corresponding to the arc segment is $\gamma_0$, which satisfies $\gamma_0$≥$\gamma_1$, i.e., the length of the arc segment in the circumferential direction is greater than the lengths of the projections of the first line segment and the second line segment in the circumferential direction, that is, for air gaps, the air gaps are divided into first air gaps with equal air gap lengths and second air gaps with unequal air gap lengths, while the circumferential length of the first air gaps is greater than or equal to the circumferential length of the second air gaps, that is, for one stator tooth, along the circumferential direction, the air gap length first becomes smaller from the second air gap to the first air gap, then becomes stable at the first air gap, and then becomes larger from the first air gap to the second gap.

In a possible embodiment, furthermore, the first line segment and the second line segment are symmetrical along a radial extension line passing through the midpoint of the arc segment.

In the embodiment, the first line segment and the second line segment are symmetrical along the radial extension line passing through the midpoint of the arc segment, that is, the first line segments and the second line segments are symmetrically located on the two sides of the arc segment, i.e., the first line segment and the second line segment are bilaterally symmetrical.

In a possible embodiment, furthermore, the stator core further comprises a yoke portion, the stator tooth is connected to the yoke portion, a number of the stator teeth is multiple, and two adjacent stator teeth in the multiple stator teeth and the yoke portion form a stator slot. A number Z2 of the rotor slots is greater than a number Z1 of the stator slots.

In the embodiment, the stator core further comprises the yoke portion; as for an internal rotor, the yoke portion presents a circular shape, the stator teeth are connected to the yoke portion, the number of the stator teeth is multiple; the multiple stator teeth are alternatively connected to the yoke portion, and two adjacent stator teeth in the multiple stator teeth and the yoke portion form the stator slot. The number Z2 of the rotor slots is greater than the number Z1 of the stator slots.

In a possible embodiment, furthermore, the rotor core comprises a plurality of rotor punching plates, and the plurality of rotor punching plates are stacked along the axial direction. The rotor core further comprises slot bodies, the slot bodies pass through and are arranged apart in each rotor punching plate along the axial direction, and the slot bodies in the plurality of rotor punching plates are communicated to form the rotor slots, and, two adjacent rotor punching plates in the plurality of rotor punching plates comprise a first punching plate and a second punching plate, the second punching plate is deflected with respect to the first punching plate and then the rotor slots are inclined relative to the axial direction.

In the embodiment, the rotor core comprises a plurality of rotor punching plates, and the plurality of rotor punching plates are stacked along the axial direction. The rotor core further comprises slot bodies, the slot bodies pass through and are arranged apart in each rotor punching plate along the axial direction, and the slot bodies in the plurality of rotor punching plates are communicated to form the rotor slots, and, two adjacent rotor punching plates in the plurality of rotor punching plates comprise the first punching plate and the second punching plate, the second punching plate is deflected with respect to the first punching plate so that the rotor slots are inclined relative to the axial direction, through the deflection of adjacent rotor punching plates, the slot bodies in the plurality of rotor punching plates form the rotor slots, and the rotor slots are inclined slots.

According to the invention, furthermore, the rotor core comprises a third punching plate and a fourth punching plate respectively located at the two ends in the axial direction, a deflection angle of the third punching plate with respect to the fourth punching plate is $\theta_{sk}$, and, $1.46g_1 \leq \theta_{sk} \times Z_2/2\pi \times (g_2-g_1) \leq 3g_1$.

According to the invention, the rotor core comprises the third punching plate and the fourth punching plate respectively located at the two ends in the axial direction, that is, the rotor punching plate located at the top of the rotor core in the axial direction is the third punching plate, the rotor punching plate located at the extremity of the rotor core in the axial direction is the fourth punching plate; the deflection angle of the third punching plate with respect to the fourth punching plate, the maximum distance $g_2-g_1$ of arc cutting and the number of the rotor slots in the rotor core satisfy the above relation, to satisfy the requirements of reducing the low-speed harmonic torque fluctuation and improving the output performance. Both the arc cutting and the inclined slots can achieve the improvement to the starting additional torque of the motor, however, both the arc cutting and the inclined slots can cause the dropping of the maximum torque and rated torque, and it is difficult to rapidly balance the matching among a plurality of working sites.

In a possible embodiment, furthermore, the deflection angle $\theta_{sk}$ is obtained by the following formula: $\theta_{sk}=\min(\theta_{sk1},\theta_{sk2})$, and, a compensation factor $k_{comp}$ satisfies the following formula: $k_{comp}=f^{-1}(\min(k(T_{max}),k(T_N),k(T_{st})))/(2\pi/Z_2)$, and thus, the value of the inverse function $f$ is obtained, and then the value of $\theta_{sk1}$ is obtained by $f=[\sin((\theta_{sk1}/(2\pi/Z_2))(\pi/2))]/(\theta_{sk1}/(2\pi/Z_2))(\pi/2)$. And, the maximum torque of the motor is $T_{max}$, the rated torque of the motor is $T_N$, the starting torque of the motor is $T_{st}$; and $\theta_{sk2}$ is the deflection angle to which the low-speed harmonic torque fluctuation of the motor corresponds optimally.

In the embodiment, it is the comparison of the torque curves in an original example (the arc cutting or the inclined rotor slots are not adopted), a first comparative example (only the arc cutting is adopted) and a second comparative example (only the inclined rotor slots are adopted), both the arc cutting and the rotor slots can achieve improving the starting additional torque, both of them can cause the dropping of the maximum torque and the rated torque, and it is difficult to rapidly balance the matching among a plurality of working condition points A, B, C, D and E. A corresponds to the starting torque $T_{st}$ of the motor, B corresponds to the maximum torque $T_{max}$ of the motor, C corresponds to the rated torque $T_N$ of the motor, and D and E correspond to the low-speed harmonic torque fluctuation $\triangle T_{ls}$.

In an embodiment, by adopting a method of matching the working points, the arc cutting and the rotor slots are matched, to satisfy the requirements of reducing the low-speed harmonic torque fluctuation and improving the output performance, and the target requirement for the performance is $T_{st}^*$, $T_{max}^*$ and $T_N^*$, and the specific operating method is provided as follows:

firstly, in a manner that the rotor slots are not inclined with respect to the axial direction, for different sizes $g_2-g_1$ of arc cutting, the working points A, B, C, D and E are calculated, the starting torque $T_{st}$ rises at the same time, the maximum torque $T_{max}$ and the rated torque $T_N$ rise firstly and then decrease, and the low-speed harmonic torque fluctuation $\triangle T_{ls}$ decreases gradually. The range of $g_2-g_1$ can be selected to be MN according to the target values $T_{st}^*$, $T_{max}^*$ and $T_N^*$. In the present example, furthermore, for $g_2-g_1$, in the circumstance that the state of the rotor slots is not taken into consideration, $g_1<g_2-g_1<3.75g_1$. $g_2-g_1$ is selected when $\triangle T_{ls}$ is relatively small, the starting torque $T_{st}$, the maximum torque $T_{max}$ and the rated torque $T_N$ at the moment are calculated.

Secondly, the starting additional torque needs to be further weakened through the rotor slots, the matching of the working points needs to meet that the target value reaches the requirements at the same time, and meanwhile, the starting additional torque is reduced as much as possible, and the angle of the rotor slots which needs to be compensated is: $\theta sk=\min(\theta sk1,\theta sk2)$. And, in order to satisfy the requirements of the working points, the compensation factor satisfies: $k_{comp}=f^{-1}(\min(k(T_{max}),k(T_N),k(T_{st}))/(2\pi/Z_2)$, a specifically introduced determination coefficient is: $k(T_{max})=T_{max}/T_{max}^*, k(T_N)=T_N/T_N^*$, and $k(T_{st})=T_{st}^*/T_{st}$. The calculation function of the introduced compensation coefficient is: $f=[\sin((\theta_{sk1}/(2\pi/Z_2))(\pi/2))]/(\theta_{sk1}/(2\pi/Z_2))(\pi/2)$.

When the matching of the working points can meet the requirements, then $\theta_{sk1}>\theta_{sk2}$, and the rotor slot angle $\theta_{sk2}$ in the rotor core is a rotor slot angle to which the low-speed harmonic torque fluctuation $\triangle T_{ls}$ corresponds optimally.

According to the above standards, when the $g_2-g_1$ adopts 0.75mm, and the rotor slot angle is $\theta_{sk2}=19°$, the low-

**EP 4 287 463 B1**

speed harmonic torque fluctuation $\triangle T_{ls}$ reaches the optimal zero, but at the moment, $\theta_{sk1}=16°<\theta Sk2$, and $T_{max}*$ and $T_N*$ do not satisfy the requirement for the matching of the working points.

The present embodiment finally selects: $g_2-g_1=0.75mm, \theta_{sk}=16°$, when the requirements of the working points are satisfied, it is achieved that the low-speed harmonic torque fluctuation is the lowest.

In a possible embodiment, furthermore, the motor further comprises a conducting bar, and the conducting bar is provided in the rotor slots; the maximum radius of the rotor core is R, and the axial length of the rotor core is L, and, the included angle $\theta y$ between the conducting bar and the axial end surface of the rotor core satisfies: $\theta y=2Rsin(\theta_{sk}/2)/L$.

In the embodiment, the motor further comprises the conducting bar, and the conducting bar is provided in the rotor slots; the maximum radius of the rotor core is R, and the axial length of the rotor core is L, and, the included angle $\theta y$ between the conducting bar and the axial end surface of the rotor core satisfies the above relation, and in the actual preparing process of the motor, the inclined conducting bar can be matched with the rotor slots in the rotor core through rotation piece by piece according to the $\theta y$.

In a possible embodiment, furthermore, the motor further comprises end covers, and the end covers are provided at the two ends of the rotor core in the axial direction. The end covers and the conducting bar are integrally molded in the rotor core. The motor further comprises a stator winding, the stator winding is provided on a plurality of stator teeth, and a portion of the stator winding is located in the stator slots.

In the embodiment, the motor further comprises the end covers, and the end covers are provided at the two ends of the rotor core in the axial direction. The end covers and the conducting bar are integrally molded in the rotor core. In an embodiment, the end covers and the conducting bar constitute one assembly by adopting an aluminum casting process, and can be fixed to the rotor core in the aluminum casting process, and the connecting performance is excellent. It needs to be explained that the motor further comprises a rotating shaft, and the rotating shaft is provided in the shaft hole of the rotor core and can rotate along with the rotor core. The motor further comprises a housing, the housing is fixed outside the stator core, and the rotating shaft is further connected to the end surface of the housing. The motor further comprises the stator winding, the stator winding is provided on a plurality of stator teeth, and a portion of the stator winding is located in the stator slots, in an embodiment, the stator winding is provided on the stator core by a method of concentrated winding.

The second aspect of the present invention proposes a compressor, comprising the motor proposed in any of the above embodiments.

The compressor proposed in the present invention comprises the motor proposed in any of the above embodiments, and thus has all the beneficial effects of the motor, which will not be repeated herein.

The third aspect of the present invention proposes a fan, comprising the motor proposed in any of the above embodiments.

The fan proposed in the present invention comprises the motor proposed in any of the above embodiments, and thus has all the beneficial effects of the motor, which will not be repeated herein.

The additional aspects and advantages of the present invention will be obvious in the following description, or can be understood through the implementation of the present invention.

## BRIEF DESCRIPTION OF THE DRAWINGS

The above and/or additional aspects and advantages of the present invention will be obvious and understood easily from the following description of the embodiments in combination with the accompanying drawings. And,

FIG. 1 shows an explosion diagram of the structure of a motor according to an embodiment of the present invention;

FIG. 2 shows a schematic view of a portion of the structure of a stator core and a rotor core in a motor according to an embodiment of the present invention;

FIG. 3 shows a side view of a rotor core of a motor according to an embodiment of the present invention;

FIG. 4 shows a top view of a rotor core of a motor according to an embodiment of the present invention;

FIG. 5 shows a schematic view of the influence of the lengths of air gaps and the rotor slots on the working points in a motor according to an embodiment of the present invention;

FIG. 6 shows a schematic view of the torque of a motor under different air gap lengths according to an embodiment of the present invention; and

FIG. 7 shows a schematic view of the torque of a motor under a deflection angle according to an embodiment of the present invention.

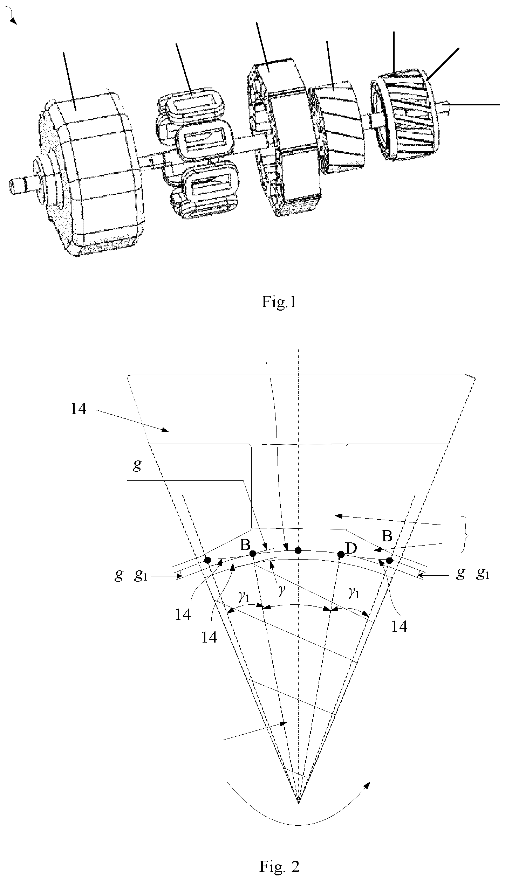

And, the corresponding relations between the reference signs in Fig. 1 to Fig. 4 and the names of the components are as follows:

1: stator core, 10: stator teeth, 10a: arc segment, 10b: first line segment, 10c: second line segment, 11: tooth boot, 12: tooth root, 13: air gap, 14: yoke portion,

2: stator winding,

3: housing,

4: rotor core, 4a: third punching plate, 4b: fourth punching plate,

5: conducting bar,

6: end cover,

7: rotating shaft, and

8: motor.

## DETAILED DESCRIPTION OF THE INVENTION

To more clearly understand the above objects, features and advantages of the present invention, the present invention will be further detailed hereinafter in combination with the accompanying drawings and specific implementing methods. It should be indicated that in the case of no conflict, the embodiments and the features in the embodiments of the present invention can be combined with each other.

Many details are illustrated in the following description for the convenience of a fully understanding to the present invention, but the embodiments of the present invention can further be implemented using other methods other than these described herein. Therefore, the protection scope of the present invention is not limited to the specific embodiments disclosed in the following text.

A motor 8, a compressor and a fan proposed by some embodiments of the present invention are described below with reference to Fig. 1 to Fig. 7.

The first aspect of the present invention proposes a motor 8, as shown in Fig. 1 and Fig. 2, comprising: a rotor core 4, rotor slots and a stator core 1. And, the rotor slots are arranged and extending through the rotor core 4, and the rotor slots are inclined with respect to the axial direction. The stator core 1 is disposed on one side of the rotor core 4. The stator core 1 comprises stator teeth 10 facing the rotor core 4, air gaps 13 are provided between the stator teeth 10 and the rotor core 4, and at least some of the air gaps 13 have unequal lengths.

The motor 8 proposed in the present invention comprises the rotor core 4, the rotor slots and the stator core 1. The rotor slots are arranged in the rotor core 4, and the rotor slots are arranged on and extending through the rotor core 4. That is, along the extending direction of the rotor slots, the rotor slots comprise two ends, and both of the two ends of the rotor slots are located in the axial end surface of the rotor core 4. Furthermore, the rotor slots are inclined with respect to the axial direction of the rotor core 4, that is, the extending direction of the rotor slots is a non-axial direction, and there is an included angle between the rotor slots and the axial end surface of the rotor core 4, i.e., the rotor slots are inclined slots.

Furthermore, the stator core 1 is disposed on one side of the rotor core 4, that is, the stator core 1 is located on the inner side of the rotor core 4, i.e., the rotor core 4 is an external rotor, and in this application scene, the rotor core 4 is in a ring shape, and the stator core 1 is provided inside the ring-shaped rotor core 4. Or, the stator core 1 is located on the outer side of the rotor core 4, i.e., the rotor core 4 is an internal rotor, and in this application scene, the stator core 1 is in a ring shape, and the rotor core 4 is located on the inner side of the ring-shaped stator core 1.

Furthermore, the stator core 1 comprises the stator teeth 10 facing the rotor core 4. For the rotor core 4 located on the inner side of the stator core 1, the air gaps 13 are formed between the stator teeth 10 and the external circle of the rotor core 4. For the rotor core 4 located on the outer side of the stator core 1, the air gaps 13 are formed between the stator teeth 10 and internal circle of the rotor core 4. For the air gaps 13 formed between the stator teeth 10 and the rotor core 4, the air gaps 13 generally extend along a circumferential direction; the air gaps 13 comprise the lengths of the air gaps 13 at different positions, and at least some of the air gaps 13 have unequal lengths, that is, the air gaps 13 between the stator teeth 10 and the rotor core 4 are not completely equal or are completely unequal.

Through disposing inclined rotor slots in the rotor core 4 and forming the air gaps 13 between the stator teeth 10 and the rotor core 4 that are not completely equal or completely unequal, the present invention satisfies the requirements of reducing the low-speed harmonic torque fluctuation and improving the output performance of the motor 8, and then the starting additional torque and rated performance of the motor 8 can be matched with each other. In an embodiment, the rotor slots are inclined with respect to the axial direction, the starting additional torque of the motor 8 can be weakened, and then the working point of the motor 8 matches and satisfies a target value.

As shown in Fig. 2, in an embodiment, the stator teeth 10 comprise an arc segment 10a and an arc cutting segment which are connected to each other and located on the axial end surface, the distance between the arc segment 10a and the rotor core 4 is a first air gap $g_1$, the maximum distance between the arc cutting segment and the rotor core 4 is a second air gap $g_2$, and, $1.5g_1 \leq (g_2-g_1) \leq 6g_1$.

In the embodiment, the stator teeth 10 comprise tooth roots 12 and tooth boots 11, the tooth boots 11 are connected to the end portion of the tooth roots 12 close to the rotor core 4, the tooth boots 11 comprise tooth walls facing the rotor core 4, and the air gaps 13 can be formed between the tooth walls and the rotor core 4. The tooth walls comprise the arc segment 10a and the arc cutting segment located on the axial end surface. It needs to be explained that the axial end surface indicates a plane perpendicular to the axial direction, i.e., the cross section of the stator teeth 10. The arc segment 10a is connected to the arc cutting segment. For the rotor core 4 located on the inner side of the stator core 1, the rotor core 4 comprises a maximum outer contour surface, the maximum outer contour surface comprises a maximum outer contour circle on the axial end surface, and the air gaps 13 between the stator teeth 10 and the rotor core 4 indicate the distance between the rotor teeth 10 and the maximum outer contour circle. Likewise, for the rotor core 4 located on the outer side of the stator core 1, the rotor core 4 comprises a minimum inner contour surface, the minimum inner contour surface comprises a minimum inner contour circle on the axial end surface, and the air gaps 13 between the stator teeth 10 and the rotor core 4 indicate the distance between the stator teeth 10 and the minimum inner contour circle.

For the specific application to the internal rotor, as for the arc segment 10a, the distances of the air gaps 13 formed between any point on the arc segment 10a and the maximum outer contour circle are equal, the air gap 13 is the first air gap, and the first air gap is the minimum air gap. For the arc cutting segment, the arc cutting segment comprises a first end point and a second end point opposing to each other, the first end point is connected to the arc segment 10a, and the distance between the first end point and the maximum outer contour circle is not equal to the distance between the second end point and the maximum outer contour circle, that is, the air gaps 13 formed between the arc cutting segment and the maximum outer contour circle are not equal. That is, in a direction from the first end point to the second end point, the air gaps 13 formed between the arc cutting segment and the maximum outer contour circle gradually become larger, the maximum air gap 13 between the arc cutting segment and the maximum outer contour circle is the second air gap, and then, the first air gap and the second air gap are made to satisfy the above relation, to satisfy the requirements of reducing the low-speed harmonic torque fluctuation and improving the output performance of the motor 8, and then the starting additional torque and rated performance of the motor 8 can be matched with each other.

In an embodiment, as shown in Fig. 2, the arc cutting segment comprises a first line segment 10b and a second line segment 10c, and the first line segment 10b and the second line segment 10c are respectively located on the two opposite sides of the arc segment 10a.

In the embodiment, there can be a plurality of arc cutting segments, the plurality of arc cutting segments comprise the first line segment 10b and the second line segment 10c, and the first line segment 10b and the second line segment 10c are respectively located on the two opposite sides of the arc segment 10a. In a circumferential direction, the stator teeth 10 comprise the first line segment 10b, the arc segment 10a and the second line segment 10c, i.e., the tooth wall of the teeth 10 the rotor 4 three segments. It needs to be explained that the first line segment 10b and the second line segment 10c can be prepared by a cutting method. In an embodiment, the wall surface of the stator teeth 10 facing the rotor core 4 can be a segment of arc in an initial state, through conducting cutting on the two sides of the stator teeth 10 in the circumferential direction, i.e., adopting an arc cutting method, the maximum distance of arc cutting is $g_2-g_1$, and the maximum distance of arc cutting and the minimum air gap (the first air gap $g_1$) between the stator core 1 and the rotor core 4 satisfy the abovementioned relation, and thereby the output performance of the motor 8 is improved.

In an embodiment, as shown in Fig. 2, the number of the first line segment 10b is at least one. The number of the first line segment 10b is in one-to-one correspondence with the number of the second line segment 10c.

In the embodiment, the number of the first line segment 10b is one, and the number of the second line segment 10c further is one; apparently, the number of the second line segment 10c can further be multiple, and the number of the second line segment 10c can further be different from the number of the first line segment 10b.

When the number of the second line segment 10c is the same with the number of the first line segment 10b, the tooth wall of the stator teeth 10 comprises three segments along the circumferential direction, i.e., the first line segment 10b, the arc segment 10a and the second line segment 10c. Undoubtedly, the number of the first line segment 10b and the second line segment 10c can be x, and, $x \geq 2$, and in this application scene, the tooth wall of the stator teeth 10 comprises 2x+1 segments along the circumferential direction, in an embodiment, there are x first line segments, the arc segment 10a and x second line segments 10c. Multiple forms of the tooth wall of the stator teeth 10 are achieved by at least one first line segment 10b and at least one second line segment 10c, and then the lengths of the air gaps 13 provided between different forms of tooth walls and the rotor core 4 satisfy the requirements, and further the output performance of the motor 8 can be effectively improved.

In an embodiment, as shown in Fig. 2, the included angle formed by the lines connecting two ends of the first line segment 10b respectively to a center of the stator core 1 is $\gamma_1$, the included angle formed by the lines connecting two ends of the second line segment 10c respectively to the center of the stator core 1 is $\gamma_2$, and it satisfies: $\gamma_1=\gamma_2$.

In the embodiment, as mentioned above, the first line segment 10b comprises the first end point and the second end point opposing to each other, the first end point is connected to the arc segment 10a, and the distance between the first end point and the maximum outer contour circle is not equal to the distance between the second end point and the maximum outer contour circle, and the distance between the first end point and the center of the stator core 1 is further not equal to the distance between the second end point and the center of the stator core 1. It needs to be explained that the center of the stator core 1 indicates a cutting point of the central axis of the stator core 1 on the cross section, and the cutting point, the arc segment 10a and the arc cutting segment are located at the same plane. In an embodiment, the lines connecting two ends of the first line segment 10b respectively to the center of the stator core 1 form the included angle $\gamma_1$, and likewise, the included angle formed by the lines connecting two ends of the second line segment 10c respectively to the center of the stator core 1 is $\gamma_2$, and $\gamma_1=\gamma_2$, that is, a portion of the stator teeth 10 is cut to form the first line segment 10b and the second line segment 10c, the central angles corresponding to the cutting portions are equal to each other, that is, the lengths of the projections of the first line segment 10b and the second line segment 10c in the circumferential direction are equal.

In an embodiment, as shown in Fig. 2, the central angle corresponding to the arc segment 10a is $\gamma_0$, which satisfies $\gamma_0 \geq \gamma_1$.

In the embodiment, the central angle corresponding to the arc segment 10a is $\gamma_0$, which satisfies $\gamma_0 \geq \gamma_1$, i.e., the length of the arc segment 10a in the circumferential direction is greater than the lengths of the projections of the first line segment 10b and the second line segment 10c in the circumferential direction, that is, for the air gaps 13, the air gaps 13 are divided into first air gaps with equal air gap 13 lengths and second air gaps with unequal air gap lengths, while the circumferential length of the first air gaps is greater than or equal to the circumferential length of the second air gaps, that is, for one stator tooth 10, along the circumferential direction, the air gap length first becomes smaller from the second air gap to the first air gap, then becomes stable at the first air gap, and then becomes larger from the first air gap to the second gap.

In an embodiment, as shown in Fig. 2, the first line segment 10b and the second line segment 10c are symmetrical along a radial extension line passing through the midpoint of the arc segment 10a.

In the embodiment, the first line segment 10b and the second line segment 10c are symmetrical along the radial extension line passing through the midpoint of the arc segment 10a, that is, the first line segments 10b and the second line segments 10c are symmetrically located on the two sides of the arc segment 10a, i.e., the first line segment 10b and the second line segment 10c are bilaterally symmetrical.

In an embodiment, the stator core 1 further comprises a yoke portion 14, the stator teeth 10 are connected to the yoke portion 14, the number of the stator teeth 10 is multiple, and two adjacent stator teeth 10 in the multiple stator teeth 10 and the yoke portion 14 form a stator slot. The number Z2 of the rotor slots is greater than the number Z1 of the stator slots.

In the embodiment, the stator core 1 further comprises the yoke portion 14; as for an internal rotor, the yoke portion 14 presents a circular shape, the stator teeth 10 are connected to the yoke portion 14, the number of the stator teeth 10 is multiple; the multiple stator teeth 10 are alternatively connected to the yoke portion 14, and two adjacent stator teeth 10 in the multiple stator teeth 10 and the yoke portion 14 form the stator slot. The number Z2 of the rotor slots is greater than the number Z1 of the stator slots.

In an embodiment, the rotor core 4 comprises a plurality of rotor punching plates, and the plurality of rotor punching plates are stacked along the axial direction. The rotor core 4 further comprises slot bodies, the slot bodies pass through and are arranged apart in each rotor punching plate along the axial direction, and the slot bodies in the plurality of rotor punching plates are communicated to form the rotor slots, and, two adjacent rotor punching plates in the plurality of rotor punching plates comprise a first punching plate and a second punching plate, the second punching plate is deflected with respect to the first punching plate and then the rotor slots are inclined relative to the axial direction.

According to the invention, the rotor core 4 comprises a plurality of rotor punching plates, and the plurality of rotor punching plates are stacked along the axial direction. The rotor core 4 further comprises the slot bodies, the slot bodies pass through and are arranged apart in each rotor punching plate along the axial direction, and the slot bodies in the plurality of rotor punching plates are communicated to form the rotor slots, and, two adjacent rotor punching plates in the plurality of rotor punching plates comprise the first punching plate and the second punching plate, the second punching plate is deflected with respect to the first punching plate and then the rotor slots are inclined relative to the axial direction, through the deflection of adjacent rotor punching plates, the slot bodies in the plurality of rotor punching plates form the rotor slots, and the rotor slots are inclined slots.

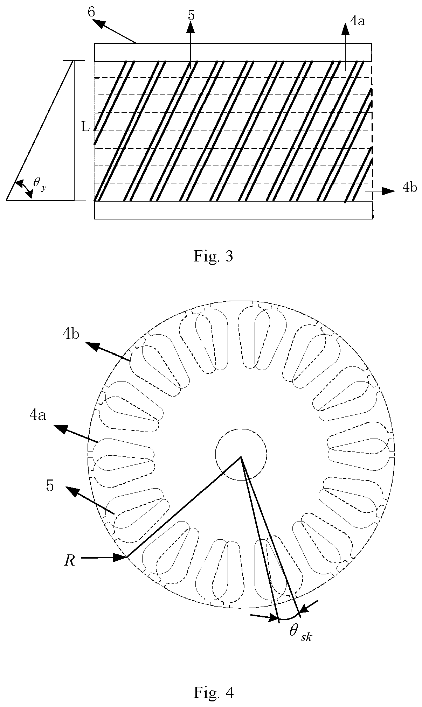

According to the invention, as shown in Fig. 3 and Fig. 4, the rotor core 4 comprises a third punching plate 4a and a fourth punching plate 4b respectively located at the two ends in the axial direction, a deflection angle of the third punching plate 4a with respect to the fourth punching plate 4b is $\theta_{sk}$, and, $1.46g_1 \leq \theta_{sk} \times Z_2/2\pi \times (g_2-g_1) \leq 3g_1$.

In the embodiment, the rotor core 4 comprises the third punching plate 4a and the fourth punching plate 4b respectively located at the two ends in the axial direction, that is, the rotor punching plate located at the top of the rotor core

4 in the axial direction is the third punching plate 4a, the rotor punching plate located at the extremity of the rotor core 4 in the axial direction is the fourth punching plate; the deflection angle of the third punching plate 4a with respect to the fourth punching plate 4b, the maximum distance $g_2$-$g_1$ of arc cutting and the number of the rotor slots in the rotor core 4 satisfy the above relation, to satisfy the requirements of reducing the low-speed harmonic torque fluctuation and improving the output performance. Both the arc cutting and the inclined slots can achieve the improvement to the starting additional torque of the motor 8, however, both the arc cutting and the inclined slots can cause the dropping of the maximum torque and rated torque, and it is difficult to rapidly balance the matching among a plurality of working sites.

Furthermore, the deflection angle $\theta_{sk}$ is obtained by the following formula: $\theta_{sk}$=min($\theta_{sk1}$,$\theta_{sk2}$), and, a compensation factor $k_{comp}$ satisfies the following formula: $k_{comp}$=$f^{-1}$(min(k($T_{max}$),k($T_N$),k($T_{st}$)))/($2\pi/Z_2$), and thus, the value of the inverse function $f$ is obtained, and then the value of $\theta_{sk1}$ is obtained by f=[sin(($\theta_{sk1}$/($2\pi/Z_2$))($\pi$/2))]/($\theta_{sk1}$/($2\pi/Z_2$))($\pi$/2). And, the maximum torque of the motor 8 is $T_{max}$, the rated torque of the motor 8 is $T_N$, the starting torque of the motor 8 is $T_{st}$; and $\theta_{sk2}$ is the deflection angle to which the low-speed harmonic torque fluctuation of the motor 8 corresponds optimally.

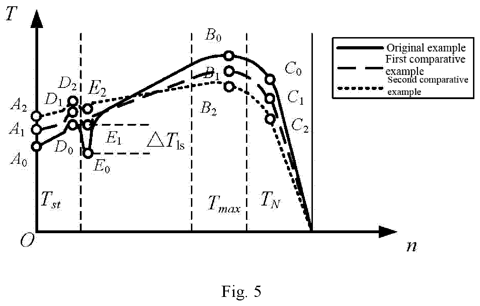

In the embodiment, as shown in Fig. 5,it is the comparison of the torque curves in an original example (the arc cutting or the inclined rotor slots are not adopted), a first comparative example (only the arc cutting is adopted) and a second comparative example (only the inclined rotor slots are adopted), both the arc cutting and the rotor slots can achieve improving the starting additional torque, both of them can cause the dropping of the maximum torque and the rated torque, and it is difficult to rapidly balance the matching among a plurality of working condition points A, B, C, D and E. A corresponds to the starting torque $T_{st}$ of the motor 8, B corresponds to the maximum torque $T_{max}$ of the motor 8, C corresponds to the rated torque of the motor 8, and D and E correspond to the low-speed harmonic torque fluctuation $\triangle T_{ls}$.

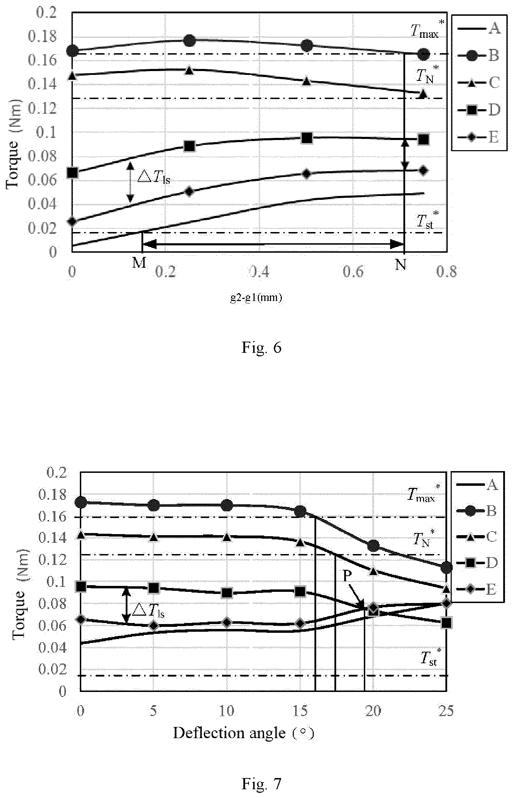

As shown in Fig. 6 and Fig. 7, by adopting a method of matching the working points, the arc cutting and the rotor slots are matched, to satisfy the requirements of reducing the low-speed harmonic torque fluctuation and improving the output performance, and the target requirement for the performance is $T_{st}$*, $T_{max}$* and $T_N$*, and the specific operating method is provided as follows:

Firstly, in a manner that the rotor slots are not inclined with respect to the axial direction, for different sizes $g_2$-$g_1$ of arc cutting, the working points A, B, C, D and E are calculated, as shown in Fig. 6, the starting torque $T_{st}$ rises at the same time, the maximum torque $T_{max}$ and the rated torque rise firstly and then decrease, and the low-speed harmonic torque fluctuation $\triangle T_{ls}$ decreases gradually. The range of $g_2$-$g_1$ can be selected to be MN according to the target values $T_{st}$*, $T_{max}$* and $T_N$*. In the present example, furthermore, for $g_2$-$g_1$, in the circumstance that the state of the rotor slots is not taken into consideration, $g_1$<$g_2$-$g_1$<3.75$g_1$. $g_2$-$g_1$ is selected when $\triangle T_{ls}$ is relatively small, the starting torque $T_{st}$, the maximum torque $T_{max}$ and the rated torque at the moment are calculated.

Secondly, the starting additional torque needs to be further weakened through the rotor slots, the matching of the working points needs to meet that the target value reaches the requirements at the same time, and meanwhile, the starting additional torque is reduced as much as possible, and the angle of the rotor slots which needs to be compensated is: θsk=min(θsk1,θsk2). And, in order to satisfy the requirements of the working points, the compensation factor satisfies: $k_{comp}$=$f^{-1}$(min(k($T_{max}$),k($T_N$),k($T_{st}$)))/($2\pi/Z_2$), and it needs to be explained that for specific working points, the value of $k_{comp}$ is determined. The specifically introduced determination coefficient is: k($T_{max}$)=$T_{max}$/$T_{max}$*,k($T_N$)=$T_N$/$T_N$*, andk($T_{st}$) =$T_{st}$*/$T_{st}$.

The calculation function of the introduced compensation coefficient is: f=[sin(($\theta_{sk1}$/($2\pi/Z_2$))($\pi$/2))]/($\theta_{sk1}$/($2\pi/Z_2$)) ($\pi$/2).

When the matching of the working points can meet the requirements, then $\theta_{sk1}$>$\theta_{sk2}$, and the rotor slot angle $\theta_{sk2}$ in the rotor core 4 is a rotor slot angle to which the low-speed harmonic torque fluctuation $\triangle T_{ls}$ corresponds optimally.

According to the above standards, when the $g_2$-$g_1$ adopts 0.75mm, and the rotor slot angle is $\theta_{sk2}$=19°, the low-speed harmonic torque fluctuation $\triangle T_{ls}$ reaches the optimal zero, but at the moment, $\theta_{sk1}$=16°<θSk2, and $T_{max}$* and $T_N$* do not satisfy the requirement for the matching of the working points.

The present embodiment finally selects: $g_2$-$g_1$=0.75mm, $\theta_{sk}$=16°, when the requirements of the working points are satisfied, it is achieved that the low-speed harmonic torque fluctuation is the lowest.

Furthermore, as shown in Fig. 1 and Fig. 3, the motor 8 further comprises a conducting bar 5, and the conducting bar 5 is provided in the rotor slots; the maximum radius of the rotor core 4 is R, and the axial length of the rotor core 4 is L, and, the included angle θy between the conducting bar 5 and the axial end surface of the rotor core 4 satisfies: θy=2Rsin($\theta_{sk}$/2)/L.

In the embodiment, the motor 8 further comprises the conducting bar 5, and the conducting bar 5 is provided in the rotor slots; the maximum radius of the rotor core 4 is R, and the axial length of the rotor core 4 is L, and, the included angle θy between the conducting bar 5 and the axial end surface of the rotor core 4 satisfies the above relation, and in the actual preparing process of the motor 8, the inclined conducting bar 5 can be matched with the rotor slots in the rotor core 4 through rotation piece by piece according to the θy.

Furthermore, as shown in Fig. 1 and Fig. 3, the motor 8 further comprises end covers 6, and the end covers 6 are provided at the two ends of the rotor core 4 in the axial direction. The end covers 6 and the conducting bar 5 are integrally molded in the rotor core 4. The motor 8 further comprises a stator winding 2, the stator winding 2 is provided on a plurality of stator teeth 10, and a portion of the stator winding 2is located in the stator slots.

In the embodiment, the motor 8 further comprises the end covers 6, and the end covers 6 are provided at the two ends of the rotor core 4 in the axial direction. The end covers 6 and the conducting bar 5 are integrally molded in the rotor core 4. In an embodiment, the end covers 6 and the conducting bar 5 constitute one assembly by adopting an aluminum casting process, and can be fixed to the rotor core 4 in the aluminum casting process, and the connecting performance is excellent. It needs to be explained that the motor 8 further comprises a rotating shaft 7, and the rotating shaft 7 is provided in the shaft hole of the rotor core 4 and can rotate along with the rotor core 4. The motor 8 further comprises a housing 3, the housing 3 is fixed outside the stator core 1, and the rotating shaft 7 is further connected to the end surface of the housing 3. The motor 8 further comprises the stator winding 2, the stator winding 2 is provided on a plurality of stator teeth 10, and a portion of the stator winding 2is located in the stator slots, in an embodiment, the stator winding 2 is provided on the stator core 1 by a method of concentrated winding.

In a specific embodiment, the motor 8 comprises a rotor core 4, rotor slots and a stator core 1. And, the rotor slots are arranged on and extending through the rotor core 4, and the rotor slots are inclined with respect to the axial direction. The stator core 1 is disposed on one side of the rotor core 4. The stator core 1 comprises stator teeth 10 facing the rotor core 4, the air gaps 13 are provided between the stator teeth 10 and the rotor core 4, and at least some of the air gaps 13 have unequal lengths.

In an embodiment, the stator teeth 10 comprise an arc segment 10a and an arc cutting segment which are connected to each other and located on the axial end surface, the distance between the arc segment 10a and the rotor core 4 is a first air gap $g_1$, the maximum distance between the arc cutting segment and the rotor core 4 is a second air gap $g_2$, and, $1.5g_1 \leq (g_2-g_1) \leq 6g_1$.

In an embodiment, a straight segment comprises a first line segment 10b and a second line segment 10c, and the first line segment 10b and the second line segment 10c are respectively located on the two opposite sides of the arc segment 10a.

In an embodiment, the number of the first line segment 10b is at least one. The number of the first line segment 10b is in one-to-one correspondence with the number of the second line segment 10c.

In an embodiment, the included angle formed by the lines connecting two ends of the first line segment 10 respectively to the center of the stator core 1 is $\gamma_1$, the included angle formed by the lines connecting two ends of the second line segment 10c respectively to a the center of the stator core 1 is $\gamma_2$, and it satisfies: $\gamma_1 = \gamma_2$.

In an embodiment, the central angle corresponding to the arc segment 10a is $\gamma_0$, which satisfies $\gamma_0 \geq \gamma_1$.

In an embodiment, the first line segment 10b and the second line segment 10c are symmetrical along a radial extension line passing through the midpoint of the arc segment 10a.

In an embodiment, the stator core 1 further comprises a yoke portion 14, the stator teeth 10 are connected to the yoke portion 14, the number of the stator teeth 10 is multiple, and two adjacent stator teeth 10 in the multiple stator teeth 10 and the yoke portion 14 form a stator slot. The number Z2 of the rotor slots is greater than the number Z1 of the stator slots.

According to the invention, the rotor core 4 comprises a plurality of rotor punching plates, and the plurality of rotor punching plates are stacked along the axial direction. The rotor core 4 further comprises slot bodies, the slot bodies pass through and are arranged apart in each rotor punching plate along the axial direction, and the slot bodies in the plurality of rotor punching plates are communicated to form the rotor slots, and, two adjacent rotor punching plates in the plurality of rotor punching plates comprise a first punching plate and a second punching plate, the second punching plate is deflected with respect to the first punching plate and then the rotor slots are inclined relative to the axial direction.

According to the invention, the rotor core 4 comprises a third punching plate 4a and a fourth punching plate 4b respectively located at the two ends in the axial direction, a deflection angle of the third punching plate 4a with respect to the fourth punching plate 4b is $\theta_{sk}$, and, $1.46g_1 \leq \theta_{sk} \times Z_2/2\pi \times (g_2-g_1) \leq 3g_1$.

In an embodiment, the deflection angle $\theta_{sk}$ is obtained by the following formula: $\theta_{sk} = \min(\theta_{sk1}, \theta_{sk2})$, and, $\theta_{sk1} = k_{comp} \times 2\pi/Z_2$; and, a compensation factor $k_{comp}$ is obtained by $k_{comp} = f^{-1}(\min(k(T_{max}), k(T_N), k(T_{st})))/(2\pi/Z_2)$, the maximum torque of the motor 8 is $T_{max}$, the rated torque of the motor 8 is $T_N$, the starting torque of the motor 8 is $T_{st}$; and $\theta_{sk2}$ is the deflection angle to which the low-speed harmonic torque fluctuation of the motor 8 corresponds optimally.

In an embodiment, the motor 8 further comprises a conducting bar 5, and the conducting bar 5 is provided in the rotor slots; the maximum radius of the rotor core 4 is R, and the axial length of the rotor core 4 is L, and, the included angle $\theta y$ between the conducting bar 5 and the axial end surface of the rotor core 4 satisfies: $\theta y = 2R\sin(\theta_{sk}/2)/L$.

In an embodiment, the motor 8 further comprises end covers 6, and the end covers 6 are provided at the two ends of the rotor core 4 in the axial direction. The end covers 6 and the conducting bar 5 are integrally molded in the rotor core 4.

In an embodiment, the motor 8 further comprises a stator winding 2, the stator winding 2 is provided on a plurality of stator teeth 10, and a portion of the stator winding 2 is located in the stator slots.

The second aspect of the present invention proposes a compressor, comprising the motor 8 proposed in any of the above embodiments.

The compressor proposed in the present invention comprises the motor 8 proposed in any of the above embodiments, and thus has all the beneficial effects of the motor 8, which will not be repeated herein.

In an embodiment, the motor 8 comprises a rotor core 4, rotor slots and a stator core 1. And, the rotor slots are arranged on and extending through the rotor core 4, and the rotor slots are inclined with respect to the axial direction. The stator core 1 is disposed on one side of the rotor core 4. The stator core 1 comprises stator teeth 10 facing the rotor core 4, the air gaps 13 are provided between the stator teeth 10 and the rotor core 4, and at least some of the air gaps 13 have unequal lengths.

The motor 8 proposed in the present invention comprises the rotor core 4, the rotor slots and the stator core 1. The rotor slots are arranged in the rotor core 4, and the rotor slots are arranged on and extending through the rotor core 4. That is, along the extending direction of the rotor slots, the rotor slots comprise two ends, and both of the two ends of the rotor slots are located in the axial end surface of the rotor core 4. Furthermore, the rotor slots are inclined with respect to the axial direction of the rotor core 4, that is, the extending direction of the rotor slots is a non-axial direction, and there is an included angle between the rotor slots and the axial end surface of the rotor core 4, i.e., the rotor slots are inclined slots.

Furthermore, the stator core 1 is disposed on one side of the rotor core 4, that is, the stator core 1 is located on the inner side of the rotor core 4, i.e., the rotor core 4 is an external rotor, and in this application scene, the rotor core 4 is in a ring shape, and the stator core 1 is provided inside the ring-shaped rotor core 4. Or, the stator core 1 is located on the outer side of the rotor core 4, i.e., the rotor core 4 is an internal rotor, and in this application scene, the stator core 1 is in a ring shape, and the rotor core 4 is located on the inner side of the ring-shaped stator core 1.

Furthermore, the stator core 1 comprises the stator teeth 10 facing the rotor core 4. For the rotor core 4 located on the inner side of the stator core 1, the air gaps 13 are formed between the stator teeth 10 and the external circle of the rotor core 4. For the rotor core 4 located on the outer side of the stator core 1, the air gaps 13 are formed between the stator teeth 10 and internal circle of the rotor core 4. For the air gaps 13 formed between the stator teeth 10 and the rotor core 4, the air gaps 13 generally extend along a circumferential direction; the air gaps 13 comprise the lengths of the air gaps 13 at different positions, and at least some of the air gaps 13 have unequal lengths, that is, the air gaps 13 between the stator teeth 10 and the rotor core 4 are not completely equal or are completely unequal. Through disposing inclined rotor slots in the rotor core 4 and forming the air gaps 13 between the stator teeth 10 and the rotor core 4 that are not completely equal or completely unequal, the present invention satisfies the requirements of reducing the low-speed harmonic torque fluctuation and improving the output performance of the motor 8, and then the starting additional torque and rated performance of the motor 8 can be matched with each other. In an embodiment, the rotor slots are inclined with respect to the axial direction, the starting additional torque of the motor 8 can be weakened, and then the working point of the motor 8 matches and satisfies a target value.

The third aspect of the present invention proposes a fan, comprising the motor proposed in any of the above embodiments.

The fan proposed in the present invention comprises the motor proposed in any of the above embodiments, and thus has all the beneficial effects of the motor, which will not be repeated herein.

In an embodiment, the motor 8 comprises a rotor core 4, rotor slots and a stator core 1. And, the rotor slots are arranged on and extending through the rotor core 4, and the rotor slots are inclined with respect to the axial direction. The stator core 1 is disposed on one side of the rotor core 4. The stator core 1 comprises stator teeth 10 facing the rotor core 4, the air gaps 13 are provided between the stator teeth 10 and the rotor core 4, and at least some of the air gaps 13 have unequal lengths.

The motor 8 proposed in the present invention comprises the rotor core 4, the rotor slots and the stator core 1. The rotor slots are arranged in the rotor core 4, and the rotor slots are arranged on and extending through the rotor core 4. That is, along the extending direction of the rotor slots, the rotor slots comprise two ends, and both of the two ends of the rotor slots are located in the axial end surface of the rotor core 4. Furthermore, the rotor slots are inclined with respect to the axial direction of the rotor core 4, that is, the extending direction of the rotor slots is a non-axial direction, and there is an included angle between the rotor slots and the axial end surface of the rotor core 4, i.e., the rotor slots are inclined slots.

Furthermore, the stator core 1 is disposed on one side of the rotor core 4, that is, the stator core 1 is located on the inner side of the rotor core 4, i.e., the rotor core 4 is an external rotor, and in this application scene, the rotor core 4 is in a ring shape, and the stator core 1 is provided inside the ring-shaped rotor core 4. Or, the stator core 1 is located on the outer side of the rotor core 4, i.e., the rotor core 4 is an internal rotor, and in this application scene, the stator core 1 is in a ring shape, and the rotor core 4 is located on the inner side of the ring-shaped stator core 1.

Furthermore, the stator core 1 comprises the stator teeth 10 facing the rotor core 4. For the rotor core 4 located on the inner side of the stator core 1, the air gaps 13 are formed between the stator teeth 10 and the external circle of the rotor core 4. For the rotor core 4 located on the outer side of the stator core 1, the air gaps 13 are formed between the stator teeth 10 and internal circle of the rotor core 4. For the air gaps 13 formed between the stator teeth 10 and the rotor core 4, the air gaps 13 generally extend along a circumferential direction; the air gaps 13 comprise the lengths of the air gaps 13 at different positions, and at least some of the air gaps 13 have unequal lengths, that is, the air gaps 13 between the stator teeth 10 and the rotor core 4 are not completely equal or are completely unequal. Through disposing inclined rotor slots in the rotor core 4 and forming the air gaps 13 between the stator teeth 10 and the rotor core 4 that are not completely equal or completely unequal, the present invention satisfies the requirements of reducing the low-speed harmonic torque fluctuation and improving the output performance of the motor 8, and then the starting additional torque and rated performance of the motor 8 can be matched with each other. In an embodiment, the rotor slots are inclined with respect to the axial direction, the starting additional torque of the motor 8 can be weakened, and then the working point of the motor 8 matches and satisfies a target value.

In the present invention, the term of "multiple" refers to two or more, unless otherwise clearly defined. The terms of "mounting", "connected to", "connection", "fix" and the like should be understood in a broad sense, for example, the term of "connect" can be a fixed connection, a detachable connection, or an integral connection; and the term of "connected to" can be a direct connection or an indirect connection through an intermediate medium. For those skilled in the art, they may understand the specific meanings of the above-mentioned terms in the present invention according to specific circumstances.

In the specification of the present invention, the terms of "an embodiment", "some embodiments", "specific embodiment" and the like mean that the specific features, structures, materials or characteristics described in combination with the embodiment or example are contained in at least one embodiment or example of the present invention. In the specification, the illustrative expression of the above terms does not necessarily indicate the same embodiment or example. In addition, the specific features, structures, materials or characteristics described above may be combined in an appropriate method in any or more of the embodiments or examples.

**Claims**

1. A motor (8), comprising:

   a rotor core (4);
   a rotor slot, which is arranged on and extending through the rotor core (4), wherein the rotor slot being inclined with respect to an axial direction; and
   a stator core (1), disposed on one side of the rotor core (4), comprising a stator tooth (10) facing the rotor core (4), wherein an air gap (13) is arranged between the stator tooth (10) and the rotor core (4), wherein at least some of the air gaps (13) have unequal lengths,
   wherein the stator tooth (10) comprises an arc segment (10a) and an arc cutting segment which are connected to each other and located on an axial end surface, a distance between the arc segment (10a) and the rotor core (4) is a first air gap $g_1$, a maximum distance between the arc cutting segment and the rotor core (4) is a second air gap $g_2$, wherein, $1.5g_1 \leq (g_2-g_1) \leq 6g_1$,
   wherein a number of the rotor slots is $Z_2$,
   wherein the rotor core (4) comprises:

      a plurality of rotor punching plates, wherein, the plurality of rotor punching plates are stacked along the axial direction; and
      slot bodies, wherein, the slot bodies pass through and are arranged apart in each rotor punching plate along the axial direction, and the slot bodies in the plurality of rotor punching plates are communicated to form the rotor slots, wherein,
      two adjacent rotor punching plates in the plurality of rotor punching plates comprise a first punching plate and a second punching plate, the second punching plate is deflected with respect to the first punching plate so that the rotor slots are inclined relative to the axial direction,
      **characterized in that** the rotor core (4) comprises a third punching plate (4a) and a fourth punching plate (4b) respectively located at two ends in the axial direction, a deflection angle of the third punching plate (4a) with respect to the fourth punching plate (4b) is $\theta_{sk}$, wherein,

   $$1.46g_1 \leq \theta_{sk} \times Z_2/2\pi \times (g_2-g_1) \leq 3g_1.$$

2. The motor (8) according to claim 1, wherein, the arc cutting segment comprises:

   a first line segment (10b), connected to one side of the arc segment (10a); and
   a second line segment (10c), connected to another side of the arc segment (10a) with respect to the first line segment (10b).

3. The motor (8) according to claim 2, wherein,

a number of the first line segment (10b) is at least one; and

the number of the first line segment (10b) is in one-to-one correspondence with a number of the second line segment (10c).

4. The motor (8) according to claim 3, wherein,

the first line segment (10b) and the second line segment (10c) are symmetrical along a radial extension line passing through a midpoint of the arc segment (10a).

5. The motor (8) according to claim 2, wherein,

an included angle formed by lines connecting two ends of the first line segment (10b) respectively to a center of the stator core (1) is $\gamma_1$, the included angle formed by lines connecting two ends of the second line segment (10c) respectively to the center of the stator core (1) is $\gamma_2$, wherein it satisfies: $\gamma_1 = \gamma_2$.

6. The motor (8) according to claim 5, wherein,

a central angle corresponding to the arc segment (10a) is $\gamma_0$, which satisfies $\gamma_0 \geq \gamma_1$.

7. The motor (8) according to any of claims 1 to 6, wherein,

the stator core (1) further comprises:

a yoke portion (14), wherein the stator tooth (10) is connected to the yoke portion (14), and multiple stator teeth (10), wherein two adjacent stator teeth (10) in the multiple stator teeth (10) and the yoke portion (14) form a stator slot; and

a number of the stator slots is $Z_1$, wherein $Z_2$ is greater than $Z_1$.

8. The motor (8) according claim 7, wherein, the motor (8) further comprises:

a conducting bar (5), provided in the rotor slot, wherein, a maximum radius of the rotor core (4) is R, and an axial length of the rotor core (4) is L, wherein,

an included angle $\theta y$ between the conducting bar (5) and an axial end surface of the rotor core (4) satisfies: $\theta y = 2R\sin(\theta_{sk}/2) / L$.

9. The motor (8) according to claim 8, wherein, the motor (8) further comprises:

end covers (6), provided at the two ends of the rotor core (4) in the axial direction;

wherein, the end covers (6) and the conducting bar (5) are integrally molded in the rotor core (4);

a stator winding (2), wherein, the stator winding (2) is provided on a plurality of stator teeth (10), and a portion of the stator winding (2) is located in the stator slots.

10. A compressor, comprising a motor (8) according to any of claims 1 to 9.

11. A fan, comprising a motor (8) according to any of claims 1 to 9.

**Patentansprüche**

1. Motor (8), umfassend:

einen Rotorkern (4);

einen Rotorschlitz, der an dem Rotorkern (4) angeordnet ist und sich durch diesen erstreckt, wobei der Rotorschlitz in Bezug auf eine axiale Richtung geneigt ist; und

einen Statorkern (1), der sich auf einer Seite des Rotorkerns (4) befindet, umfassend einen dem Rotorkern (4) zugewandten Statorzahn (10), wobei zwischen dem Statorzahn (10) und dem Rotorkern (4) ein Luftspalt (13) angeordnet ist, wobei zumindest einige der Luftspalte (13) ungleiche Längen aufweisen,

wobei der Statorzahn (10) ein Bogensegment (10a) und ein Bogenschnittsegment umfasst, die miteinander verbunden sind und sich an einer axialen Endfläche befinden, ein Abstand zwischen dem Bogensegment (10a) und dem Rotorkern (4) ein erster Luftspalt $g_1$ ist, ein maximaler Abstand zwischen dem Bogenschnittsegment und dem Rotorkern (4) ein zweiter Luftspalt $g_2$ ist, wobei $1{,}5g_1 \leq (g_2 - g_1) \leq 6g_1$ ist,

wobei die Anzahl der Rotorschlitze $Z_2$ ist,

wobei der Rotorkern (4) Folgendes umfasst:

eine Vielzahl von Rotorstanzplatten, wobei die Vielzahl von Rotorstanzplatten entlang der axialen Richtung gestapelt ist; und

Schlitzkörper, wobei die Schlitzkörper jede Rotorstanzplatte entlang der axialen Richtung durchlaufen und in dieser beabstandet angeordnet sind, und die Schlitzkörper in der Vielzahl von Rotorstanzplatten miteinander verbunden sind, um die Rotorschlitze auszubilden, wobei

zwei benachbarte Rotorstanzplatten in der Vielzahl von Rotorstanzplatten eine erste Stanzplatte und eine zweite Stanzplatte umfassen, die zweite Stanzplatte gegenüber der ersten Stanzplatte so abgelenkt ist, dass die Rotorschlitze relativ zur axialen Richtung geneigt sind,

**dadurch gekennzeichnet, dass** der Rotorkern (4) eine dritte Stanzplatte (4a) und eine vierte Stanzplatte (4b) umfasst, die sich jeweils an zwei Enden in axialer Richtung befinden, ein Ablenkwinkel der dritten Stanzplatte (4a) gegenüber der vierten Stanzplatte (4b) $\theta_{sk}$ ist, wobei

$$1{,}46g_1 \leq \theta_{sk} \times Z_2 / 2\pi \times (g_2 - g_1) \leq 3g_1$$

ist.

2. Motor (8) gemäß Anspruch 1, wobei das Bogenschneidsegment Folgendes umfasst:

ein erstes Liniensegment (10b), das mit einer Seite des Bogensegments (10a) verbunden ist; und
ein zweites Liniensegment (10c), das in Bezug auf das erste Liniensegment (10b) mit einer anderen Seite des Bogensegments (10a) verbunden ist.

3. Motor (8) gemäß Anspruch 2, wobei

eine Anzahl der ersten Liniensegmente (10b) mindestens eins ist; und
die Anzahl der ersten Liniensegmente (10b) in einer Eins-zu-Eins-Entsprechung zu einer Anzahl der zweiten Liniensegmente (10c) ist.

4. Motor (8) gemäß Anspruch 3, wobei
das erste Liniensegment (10b) und das zweite Liniensegment (10c) entlang einer radialen Verlängerungslinie, die durch einen Mittelpunkt des Bogensegments (10a) verläuft, symmetrisch sind.

5. Motor (8) gemäß Anspruch 2, wobei
ein eingeschlossener Winkel, der durch Linien ausgebildet wird, die zwei Enden des ersten Liniensegments (10b) jeweils mit einem Mittelpunkt des Statorkerns (1) verbinden, $\gamma_1$ ist, der eingeschlossene Winkel, der durch Linien ausgebildet wird, die zwei Enden des zweiten Liniensegments (10c) jeweils mit dem Mittelpunkt des Statorkerns (1) verbinden, $\gamma_2$ ist, wobei folgende Bedingung erfüllt ist: $\gamma_1 = \gamma_2$.

6. Motor (8) gemäß Anspruch 5, wobei
ein dem Bogenabschnitt (10a) entsprechender Zentralwinkel $\gamma_0$ ist, der die Bedingung $\gamma_0 \geq \gamma_1$ erfüllt.

7. Motor (8) gemäß einem der Ansprüche 1 bis 6, wobei
der Statorkern (1) ferner Folgendes umfasst:

einen Jochbereich (14), wobei der Statorzahn (10) mit dem Jochbereich (14) verbunden ist, und mehrere Statorzähne (10), wobei zwei benachbarte Statorzähne (10) unter den mehreren Statorzähnen (10) und dem Jochbereich (14) einen Statorschlitz ausbilden; und
die Anzahl der Statorschlitze $Z_1$ ist, wobei $Z_2$ größer als $Z_1$ ist.

8. Motor (8) gemäß Anspruch 7, wobei der Motor (8) ferner Folgendes umfasst:
eine im Rotorschlitz vorgesehene Leiterschiene (5), wobei der maximale Radius des Rotorkerns (4) R ist und eine axiale Länge des Rotorkerns (4) L ist, wobei ein eingeschlossener Winkel $\theta y$ zwischen der Leiterschiene (5) und einer axialen Endfläche des Rotorkerns (4) die folgende Gleichung erfüllt: $\theta y = 2R \sin(\theta_{sk}/2)/L$.

9. Motor (8) gemäß Anspruch 8, wobei der Motor (8) ferner Folgendes umfasst:

Endabdeckungen (6), die an den zwei Enden des Rotorkerns (4) in der axialen Richtung vorgesehen sind; wobei die Endabdeckungen (6) und die Leiterschiene (5) einstückig in den Rotorkern (4) eingegossen sind; eine Statorwicklung (2), wobei die Statorwicklung (2) auf einer Vielzahl von Statorzähnen (10) vorgesehen ist und sich ein Bereich der Statorwicklung (2) in den Statorschlitzen befindet.

**10.** Kompressor, umfassend einen Motor (8) gemäß einem der Ansprüche 1 bis 9.

**11.** Lüfter, umfassend einen Motor (8) gemäß einem der Ansprüche 1 bis 9.

**Revendications**

**1.** Un moteur (8), comprenant :

un noyau de rotor (4) ;
une fente de rotor, qui est disposée sur le noyau de rotor (4) et s'étend à travers celui-ci, ladite fente de rotor étant inclinée par rapport à une direction axiale ; et
un noyau de stator (1), disposé d'un côté du noyau de rotor (4), comprenant une dent de stator (10) tournée vers le noyau de rotor (4), un entrefer (13) étant disposé entre la dent de stator (10) et le noyau de rotor (4), au moins certains des entrefers (13) ayant des longueurs inégales,
la dent de stator (10) comprenant un segment en arc (10a) et un segment de découpe en arc qui sont reliés l'un à l'autre et situés sur une surface d'extrémité axiale, une distance entre le segment en arc (10a) et le noyau de rotor (4) constituant un premier entrefer $g_1$, une distance maximale entre le segment de découpe en arc et le noyau de rotor (4) est un deuxième entrefer $g_2$, où $1,5g_1 \leq (g_2 - g_1) \leq 6g_1$ ,
un nombre des fentes du rotor étant $Z_2$,
le noyau de rotor (4) comprenant :

une pluralité de plaques perforées de rotor, dans laquelle la pluralité de plaques perforées de rotor est empilée dans la direction axiale ; et
des corps de fentes, lesdits corps de fentes traversant chaque plaque perforée de rotor et étant disposés à distance les uns des autres dans la direction axiale, et les corps de fentes de la pluralité de plaques perforées de rotor étant reliés entre eux pour former les fentes du rotor,
deux plaques perforées adjacentes de rotor parmi la pluralité de plaques perforées de rotor comprennent une première plaque perforée et une deuxième plaque perforée, la deuxième plaque perforée étant déviée par rapport à la première plaque perforée de telle sorte que les fentes du rotor soient inclinées par rapport à la direction axiale, **caractérisé en ce que** le noyau de rotor (4) comprend une troisième plaque perforée (4a) et une quatrième plaque perforée (4b) situées respectivement à deux extrémités dans la direction axiale, un angle de déviation de la troisième plaque perforée (4a) par rapport à la quatrième plaque perforée (4b) étant égal à $\theta_{sk}$, où :

$$1,46g_1 \leq \theta_{sk} \times Z_2 /2\pi \times (g_2 - g_1) \leq 3g_1 .$$

**2.** Moteur (8) selon la revendication 1, dans lequel le segment de découpe en arc comprend :

un premier segment de ligne (10b), relié à un côté du segment en arc (10a) ; et
un deuxième segment de ligne (10c), relié à un autre côté du segment en arc (10a) par rapport au premier segment de ligne (10b).

**3.** Moteur (8) selon la revendication 2, dans lequel :

un nombre de premiers segments de ligne (10b) est au moins égal à un ; et
le nombre de premiers segments de ligne (10b) est en correspondance biunivoque avec un nombre de seconds segments de ligne (10c).

**4.** Moteur (8) selon la revendication 3, dans lequel :
le premier segment de ligne (10b) et le deuxième segment de ligne (10c) sont symétriques par rapport à une ligne d'extension radiale passant par le point milieu du segment en arc (10a).

**5.** Moteur (8) selon la revendication 2, dans lequel,
un angle inclus formé par des lignes reliant respectivement deux extrémités du premier segment de ligne (10b) à un centre du noyau de stator (1) est $\gamma_1$ , l'angle inclus formé par des lignes reliant respectivement deux extrémités du deuxième segment de ligne (10c) au centre du noyau de stator (1) est $\gamma_2$ , où l'on a : $\gamma_1 = \gamma_2$ .

**6.** Moteur (8) selon la revendication 5, dans lequel
un angle central correspondant au segment en arc (10a) est $\gamma_0$, et satisfait à la relation $\gamma_0 \geq \gamma_1$.

**7.** Moteur (8) selon l'une quelconque des revendications 1 à 6, dans lequel,
le noyau de stator (1) comprend en outre :

une partie de culasse (14), la dent de stator (10) étant reliée à la partie de culasse (14), et plusieurs dents de stator (10), deux dents de stator adjacentes (10) parmi lesdites plusieurs dents de stator (10) et la partie de culasse (14) formant une encoche de stator ; et
un nombre de fentes de stator est $Z_1$, $Z_2$ étant supérieur à $Z_1$.

**8.** Moteur (8) selon la revendication 7, dans lequel le moteur (8) comprend en outre :

une barre conductrice (5), disposée dans la fente du rotor, dans laquelle un rayon maximal du noyau du rotor (4) est égal à R, et une longueur axiale du noyau du rotor (4) est égale à L, dans laquelle
un angle inclus $\theta y$ entre la barre conductrice (5) et une surface d'extrémité axiale du noyau de rotor (4) satisfait à la relation suivante : $\theta y = 2Rsin(\theta_{sk}/ 2) / L$.

**9.** Moteur (8) selon la revendication 8, dans lequel le moteur (8) comprend en outre :

des couvercles d'extrémité (6), prévus aux deux extrémités du noyau de rotor (4) dans la direction axiale ;
dans lequel les couvercles d'extrémité (6) et la barre conductrice (5) sont moulés d'un seul tenant dans le noyau de rotor (4) ;
un enroulement de stator (2), dans lequel l'enroulement de stator (2) est disposé sur une pluralité de dents de stator (10), et une partie de l'enroulement de stator (2) est située dans les encoches du stator.

**10.** Compresseur, comprenant un moteur (8) selon l'une quelconque des revendications 1 à 9.

**11.** Ventilateur, comprenant un moteur (8) selon l'une quelconque des revendications 1 à 9.

Fig.1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3032313 A1
- US 2006192457 A1
- US 2014028148 A1
- CN 110718974 B